(19) Europäisches Patentamt

European Patent Office

Office européen des brevets

(11) **EP 4 443 941 A1**

(12) **EUROPEAN PATENT APPLICATION**

(43) Date of publication:
**09.10.2024 Bulletin 2024/41**

(21) Application number: **23166402.0**

(22) Date of filing: **03.04.2023**

(51) International Patent Classification (IPC):
**H04W 24/02** *(2009.01)*    **H04W 88/02** *(2009.01)*
**H04W 88/18** *(2009.01)*

(52) Cooperative Patent Classification (CPC):
**H04W 24/02; H04W 88/021; H04W 88/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Solutions and Networks Oy**
**02610 Espoo (FI)**

(72) Inventors:
• **MANDELLI, Silvio**
  **71634 Ludwigsburg (DE)**
• **WESEMANN, Stefan**
  **70806 Kornwestheim (DE)**
• **WILD, Thorsten**
  **70435 Stuttgart (DE)**
• **VALCARCE RIAL, Alvaro**
  **72380 Garches (FR)**
• **LABRIJI, Ibtissam**
  **92160 Antony (FR)**

(74) Representative: **Swindell & Pearson Limited**
**48 Friar Gate**
**Derby DE1 1GY (GB)**

(54) **SETUP OF FIXED WIRELESS ACCESS TERMINAL**

(57)    A network node for setup of a fixed wireless access terminal in a cellular radio telecommunications system comprising:

means for obtaining interference-dependent measurements in respect of communication channels between the fixed wireless access terminal, at different positions, and, optionally, different candidate serving cells;

means for performing an optimization process to find one of the different positions that optimizes an objective function based, at least, upon a parameter that is or depends at least upon spectral efficiency for different positions of the fixed wireless access terminal;

means for identifying the position of the fixed wireless access terminal found by the optimization process.

FIG 1

## Description

TECHNOLOGICAL FIELD

Examples of the disclosure relate to fixed wireless access.

BACKGROUND

A fixed wireless access terminal is a terminal of a radio access network that, in use, has a fixed (stationary) position.
A fixed wireless access terminal 10 is often used as a gateway between the radio access network 14 and a local area network.
It is desirable to install fixed wireless access terminals efficiently such that installation costs and ongoing costs are reduced.

BRIEF SUMMARY

According to various, but not necessarily all, examples there is provided examples as claimed in the appended claims.
While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

  FIG. 1 shows an example of the subject matter described herein;
  FIG. 2 shows another example of the subject matter described herein;
  FIG. 3 shows another example of the subject matter described herein;
  FIG. 4 shows another example of the subject matter described herein;
  FIG. 5 shows another example of the subject matter described herein;
  FIG. 6 shows another example of the subject matter described herein;
  FIG. 7 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

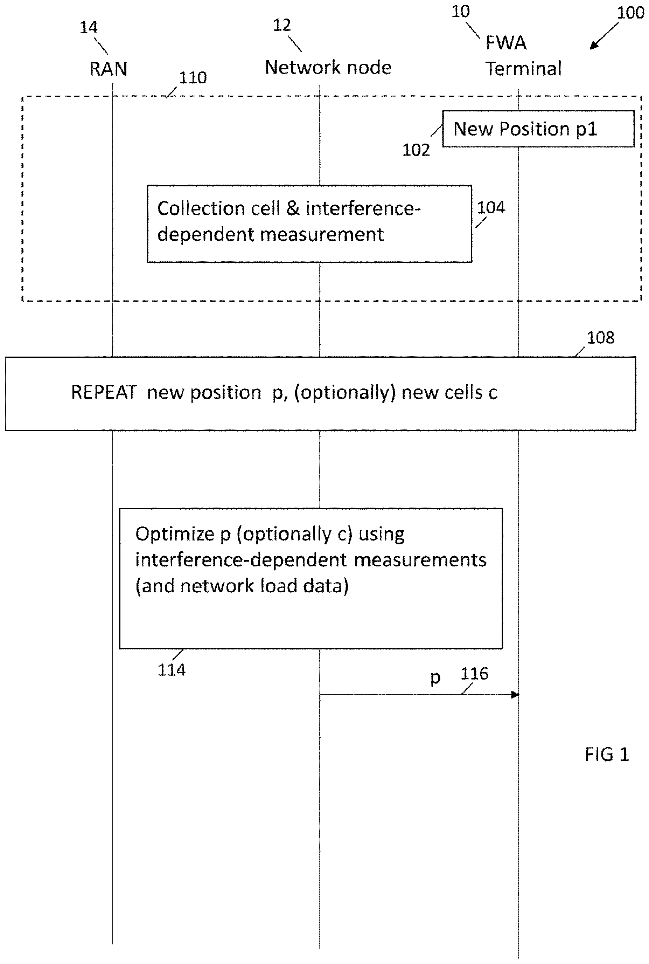

FIG. 1 illustrates an example of a system 100 comprising a fixed wireless access terminal 10, a radio access network 14 and a network node 12 that manages setup, for example positioning setup, of the fixed wireless access terminal 10.
A fixed wireless access terminal 10 is a terminal of a radio access network 14 that, after setup, has a fixed (stationary) position.
In a Third Generation Partnership 3GPP network, the fixed wireless access terminal 10 is user equipment but it has a stationary position.
The radio access network 14 is a part of the cellular communications system. It comprises a plurality of cells that are served by base stations. As a terminal of the radio access network 14 moves, it can be handed over from one cell to another cell.
The serving cell for a terminal of the radio access network 14 therefore depends upon the position (location and possibly orientation) of the terminal and the quality of the communication channel between the base station of the serving cell and the terminal of the radio access network 14.
It is desirable to select a sufficiently good or even an optimal position for the fixed wireless access terminal 10.
In FIG.1, the network node 12 for setup of the fixed wireless access terminal 10 in the cellular radio telecommunications system 100 comprises:

  means 104 for obtaining interference-dependent measurements in respect of communication channels between the fixed wireless access terminal 10, at different positions, and, optionally, different candidate serving cells;
  means for performing an optimization process 114 to find one of the different positions; means for identifying the optimum position 116 to the fixed wireless access terminal 10.

In some examples, the means for performing the optimization process 114 can find one of the different positions and/or cells. For example, the means for performing the optimization process 114 to can find one of the different positions (without finding a cell), can find one of the cells (without finding a position) or can find a combination of a position and a cell (from different combinations).

The position found can be an optimal position. The cell found can be an optimal cell. The combination found can be an optimal combination.

In some examples, the means for performing the optimization process 114 optimizes an objective function based, at least, upon a parameter that is or depends at least upon spectral efficiency for different positions of the fixed wireless access terminal.

In some examples, the means for performing the optimization process 114 optimizes throughput and/or spectral occupation of the communication channel for the fixed wireless access terminal 10 at the different positions. For example, an optimal position can optimize (maximize) throughput and/or optimize (minimize) spectral occupation.

In FIG.1, the fixed wireless access (FWA) terminal 10 is moved 102 to a new position. The network node 12 obtains interference-dependent measurements in respect of communication channels between the fixed wireless access terminal 10 and one or more candidate serving cells. The process 110 of moving the fixed wireless access terminal 10 and then obtaining interference-dependent measurements in respect of communication channels between the fixed wireless access terminal 10 and one or more candidate serving cells is repeated 108. As a consequence, the network node 12 obtains interference-dependent measurements in respect of communication channels between the fixed wireless access terminal 10, at different positions, and one or more different candidate serving cells. It is therefore optional whether there are different candidate serving cells.

In some examples, the network node performs an optimization process 114 to find an optimal one of the different positions that optimizes throughput and/or spectral occupation of the communication channel for the fixed wireless access terminal 10 at the different positions. For each of the different positions, there is a throughput and/or spectral occupation of a communication channel for the fixed wireless access terminal 10, at that position, between the fixed wireless access terminal 10 and a serving cell. The optimization process 114 finds an optimal throughput and/or spectral occupation of a communication channel for the fixed wireless access terminal 10 and also determines the position of the fixed wireless access terminal 10 that resulted in that optimal throughput and/or spectral occupation of the communication channel for the fixed wireless access terminal 10.

The network node 12 then identifies the optimum position 116 of the fixed wireless access terminal 10, for example to a user of the fixed wireless access terminal 10 either via the fixed wireless access terminal 10 or otherwise.

In at least some examples, the network node 12 is configured to receive at least some of the interference-dependent measurements in respect of communication channels between the fixed wireless access terminal 10, at different positions, and, optionally, different candidate serving cells.

In at least some examples, the fixed wireless access terminal 10 is configured to make at least some of the interference-dependent measurements in respect of communication channels between the fixed wireless access terminal 10, at different positions, and a serving cell and , optionally, is configured to make at least some of the interference-dependent measurements in respect of other cells The network node 12 is configured to receive from the fixed wireless access terminal 10 at least some of the interference-dependent measurements in respect of communication channels between the fixed wireless access terminal 10, at different positions, and, optionally, different candidate serving cells.

In at least some examples, the fixed wireless access terminal 10 is configured to make at least some of the interference-dependent measurements in respect of communication channels between the fixed wireless access terminal 10, at different positions, and, optionally, different cells or candidate serving cells, and is configured to transfer the measurements to the network node 12. The network node 12 is configured to receive from the fixed wireless access terminal 10 at least some of the interference-dependent measurements in respect of communication channels between the fixed wireless access terminal 10, at different positions, and, optionally, different candidate serving cells.

In at least some examples, the radio access network is configured to make at least some of the interference-dependent measurements in respect of communication channels between the fixed wireless access terminal 10, at different positions, and, optionally, different candidate serving cells, and is configured to transfer the measurements to the network node 12. The network node 12 is configured to receive from the radio access node 14 at least some of the interference-dependent measurements in respect of communication channels between the fixed wireless access terminal 10, at different positions, and, optionally, different candidate serving cells.

In at least some examples, the optimization process 114 optimizes an objective function based, at least, upon a parameter that is or depends upon spectral efficiency.

For example the optimization process 114 can be configured to maximize a position-dependent utility function based on throughput of the communication channel for the fixed wireless access terminal 10 and/or configured to minimize a position-dependent cost function based on spectral occupation of the communication channel for the fixed wireless access terminal 10. The position-dependence is a dependency on a position of the fixed wireless access terminal 10.

The spectral efficiency can be maximized by maximizing the utility function, by minimizing the cost function, or by maximizing a function that increases with increasing utility and decreases with increasing costs e.g. utility/cost.

In some examples, a position is a location. In some examples, a position is a location and an orientation.

As previously described, the optimization process 114 can optimize an objective function based, at least, upon a parameter that is or depends upon spectral efficiency. In some but not necessarily all examples, the parameter dependent upon spectral efficiency is or is based upon one or more of:

> throughput,
> signal-to-interference-noise-ratio (SINR),
> reference signal received quality (RSRQ),
> Channel Quality Indicator (CQI),
> resource occupancy,
> spectral efficiency,
> current load,
> average load,
> peak load.

For example, spectral efficiency can be based on average throughput, a specific threshold throughput such as a quantile (e.g., 10%-ile) of the throughput, a current throughput or a peak throughput which can be calculated as the CarriedData divided by the Active-TransmissionTime.

The throughput, signal-to-interference-noise-ratio (SINR), reference signal received quality (RSRQ), Channel Quality Indicator (CQI) can be for uplink and/or for downlink.

In some examples, the parameter or information for determining the parameter is received from the fixed wireless access terminal 10 via a radio access node or via a different channel. In some examples, spectral efficiency is determined by timing (determining a time duration for) a transfer of a known quantity of data between the network node 12 and the fixed wireless access terminal 10. In some examples, a spectral efficiency of the uplink is determined by timing (determining a time duration for) a transfer of a known quantity of data to the network node 12, via the radio access network 14, from the fixed wireless access terminal 10. In some examples, a spectral efficiency of the downlink is determined by timing (determining a time duration for) a transfer of a known quantity of data from the network node 12, via the radio access network 14, to the fixed wireless access terminal 10.

The spectral efficiency of the downlink can, for example, be determined by measuring resources used, such as a number of occupied physical resource blocks (PRBs) (or resource elements) used to transmit data, for example the transmitted data divided by the NumberOf-PRBs (or resource elements).

A PRB can, for example, be a time-frequency resources that spans a multiple symbols. A *resource element* (RE) can, for example, be one subcarrier in one OFDM symbol.

In some examples, the optimization process 114 optimizes an objective function for the fixed wireless access terminal 10, This is a local optimization for the particular fixed wireless access terminal 10. The best spectral efficiency or throughput for that FWA terminal 10 is found by optimizing across multiple cell-position combinations for that FWA terminal 10.

In some examples, the optimization process optimizes an objective function for multiple fixed wireless access terminals 10. This is a global optimization for the particular group of fixed wireless access terminals 10. The best spectral efficiency or throughput for all FWA terminals 10 in the group is found by optimizing across multiple cell-position-terminal combinations for the group of FWA terminals 10.

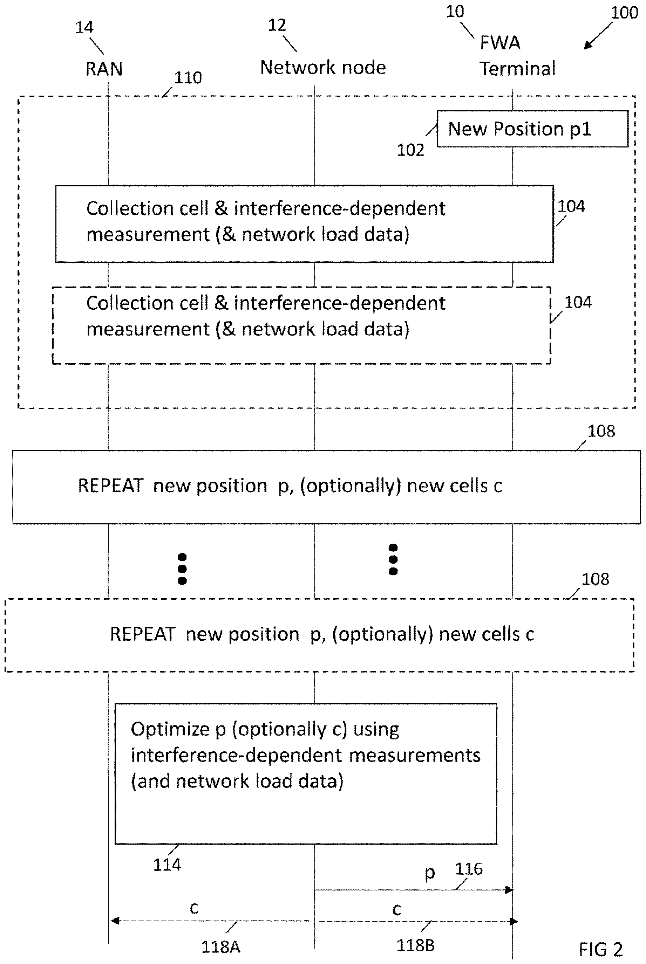

FIG.2 illustrates an example of the system 100 previously described in relation to FIG.1.

In FIG.2, the fixed wireless access (FWA) terminal 10 is moved 102 to a new position. The network node 12 obtains 104 interference-dependent measurements in respect of communication channels between the fixed wireless access terminal 10 and one or more candidate serving cells. The interference-dependent measurements can be made at the radio access network 14 and transferred to the network node (directly or via the FWA terminal 10) or made at the FWA terminal 10 and transferred to the network node 12.

The process 110 of moving the fixed wireless access terminal 10 and then obtaining 104 interference-dependent measurements in respect of communication channels between the fixed wireless access terminal 10 and one or more candidate serving cells may be repeated 108, multiple times.

As a consequence, the network node 12 obtains interference-dependent measurements in respect of communication channels between the fixed wireless access terminal 10, at different positions, and one or more different candidate serving cells. It is therefore optional whether there are different candidate serving cells.

The network node performs an optimization process 114 to find an optimal one of the different positions that optimizes throughput and/or spectral occupation of the communication channel for the fixed wireless access terminal 10 at the different positions.

For each of the different positions, there is a throughput and/or spectral occupation of a communication channel for the fixed wireless access terminal 10 at that position between the fixed wireless access terminal 10 and a serving cell. The optimization process 114 finds an optimal throughput and/or spectral occupation of a communication channel for the fixed wireless access terminal 10 and also determines the position of the fixed wireless access terminal 10 that resulted in that optimal throughput and/or spectral occupation of the communication channel for the fixed wireless access terminal 10.

The network node 12 then identifies the optimum position 116 to the fixed wireless access terminal 10.

The optimization process 114, for example as described with reference to FIG.1 and FIG.2 or elsewhere, can be configured to find an optimal one of the different candidate cells and a position of the FWA terminal 10 that optimizes throughput and/or spectral occupation of the communication channel for the fixed wireless access terminal 10 and the different candidate cells.

A by-product of finding an optimal communication channel is not only the position of the FWA terminal 10 but also the serving cell for that communication channel.

The optimization process 114 in FIG.1 and FIG.2 can thus find an optimal combination of serving cell and position of the FWA terminal 10 that optimizes throughput and/or spectral occupation of the communication channel for the fixed wireless access terminal 10 and the serving cell.

The network node 12 can in some examples comprise means for identifying 118A the selected one of the multiple candidate cells to the radio access node and/or for identifying 118B the selected one of the multiple candidate cells to the fixed wireless access terminal 10. The optimization process 114, for example as described with reference to FIG.1 and FIG.2 or elsewhere, can be configured as a constrained optimization, that is an optimization that is forced to meet defined constraints.

In some but not necessarily all examples, the network node 12 is configured to obtain network data, that is used to provides one or more constraints for the optimization process 114. In some but not necessarily all examples, the network node 12 is configured to obtain the network data from the radio access network 14.

In some examples, the network data comprises network load data for example bandwidth/throughput available per cell or per terminal 10.

In some examples, the optimization process 114 is constrained by load or available I bandwidth at a cell. In some examples, the optimization process 114 is constrained to prevent full saturation of a cell, that is the use of the entire available bandwidth of a cell. In some examples, the optimization process is constrained to prevent partial saturation of a cell, that is at least a threshold minimum amount of bandwidth must remain available at the cell.

In some examples, the optimization process is constrained by a minimum throughput. For example, the throughput for a FWA terminal must equal or exceed a minimum throughput. The minimum throughput can for example be a minimum contracted throughput specified in a service agreement for the FWA terminal 10.

In at least some examples, it is desirable to co-ordinate (synchronize) measurement in respect of communication channel with the time period during which the fixed wireless access terminal 10 is using that communication channel.

The fixed wireless access terminal 10 at a first position can, for example, communicate with a first cell, at a first time, using a first communication channel. between the fixed wireless access terminal 10 and the first cell. The fixed wireless access terminal 10 at the first position can, for example, communicate with a second cell, at a second time, using a second communication channel between the fixed wireless access terminal 10 and the second cell. The measurement in respect of the first communication channel needs to occur at the first time (not the second time). The measurement in respect of the second communication channel needs to occur at the second time (not the first time).

The fixed wireless access terminal 10 at a second position can, for example, communicate with a cell (the same or different to the first cell or the second cell), at a third time, using a third communication channel between the fixed wireless access terminal 10 and the cell. The measurement in respect of the third communication channel needs to occur at the third time (not the first time or the second time). The measurement in respect of the first and second communication channels need to not occur at the third time.

In at least some examples, the network node 12 is configured to co-ordinate measurement in respect of communication channels between the fixed wireless access terminal 10 and a sequence of serving cells with time periods during which the fixed wireless access terminal 10 is connected to the respective serving cell.

In at least some examples, the network node 12 is configured to co-ordinate a sequence of measurements between the fixed wireless access terminal and different cells, for example the serving cell and one or more cells other than the serving cell. For example, the FWA terminal can remain connected to a servings cell e.g. RRC-connected to a cell and also perform the measurements required for other cells (e.g. intra-frequency neighbor cells) that are not serving cells (to which the CPE is NOT RRC-connected). For inter-frequency (or even inter-RAT) neighboring cells, the serving cell can enable "gaps" ( inactivity periods( that the FWA terminal can use to sync to other cells, and make measurements. Therefore RRC-Connectivity between the FAW terminal and a cell is not essential to measure the cell.

The fixed wireless access terminal 10 can be at a fixed position during the sequence. Alternatively, or additionally, the fixed wireless access terminal 10 can be at different fixed positions during the sequence.

The network node 12 can, for example, be configured to provide timing information to enable the above described co-ordination to the FWA terminal 10. The timing information can, for example, indicate the first time, the second time, the third time as appropriate.

The timing information can, for example, be received from the Radio Access Network 14, for example, in response to a request from the network node 12.

In at least some examples, the network node 10 is configured to send at

least one guidance message to a user of the fixed wireless access terminal 10 that instructs scheduled re-positioning of the fixed wireless access terminal 10. The guidance message can, for example, be sent to the FWA terminal 10 or to a user apparatus. The guidance message can, for example, be sent to an application program running on a user apparatus, for example a mobile cellular telephone or other electronic device.

The guidance message can, for example, assist with the co-ordination (synchronization) of measurements as described above.

The guidance message can, for example, assist with the optimal positioning of the FWA terminal 10 by providing radio access network information such as location, bearing, signal strength associated with proximal cells or proximal cells with sufficient capacity.

It will therefore be appreciated that in at least some examples, the system 100 comprises:

a network node 12 comprising means for sending at least one guidance message to a user of the fixed wireless access terminal 10 that instructs scheduled re-positioning of the fixed wireless access terminal 10 and

at least a fixed wireless access terminal 10 or other apparatus comprising

means for receiving the at least one guidance message that enables a user of the fixed wireless access terminal 10 to re-position the fixed wireless access terminal 10 in accordance with a scheduled re-positioning of the fixed wireless access terminal 10 indicated in the received guidance message.

A computer program (for example an application program) can be configured to display instructions to the user of the fixed wireless access terminal 10 that instructs a scheduled re-positioning of the fixed wireless access terminal 10 and to indicate to the user of the fixed wireless access terminal 10 the optimum position.

The computer program can, for example, be run on at least one processor of the FWA terminal 10 or of a user apparatus, for example, a mobile cellular telephone.

The above-described system enables a do-it-yourself installation of a FWA terminal 10 at a good or optimal position without a requirement to use the services of a specialist engineer. Although, the system 100 could be used by an engineer.

The above-described system 100 enables a homeowner to successfully position a FWA terminal 10 within their house.

The system 100 facilitates good or optimal positioning of the FWA terminal 10.

The positioning can, for example, achieve a minimum guaranteed service level requirement for the FWA terminal 10 based on quality measurements (not predictions, or mere measurement of signal strength). This can be achieved while balancing load across cells.

A poor placement of the FWA terminal 10 would unnecessarily consume large amounts of radio resources and cause a significant amount of inter-cell interference. This is avoided.

A poor placement of the FWA terminal 10 would unnecessarily result in poor service quality that would persist for a long period of time. This is avoided.

The FWA terminal 10 can, in some examples, additionally provide a Wi-Fi hub that provides a gateway to the internet. This may, for example, be a standalone access point or part of a Wi-Fi mesh network.

The FWA terminal 10 can, in some examples, comprise an antenna array for beam forming communication with the radio access network 14. The cells of the radio access network 14 can also be configured for beamforming communication.

The FWA terminal 10 can, in some examples, achieve a communication channel with at bandwidth greater than 200 Mbps at the optimum position determined by the optimization process 114. In some examples, the requirement for a communication channel with at bandwidth greater than 200 Mbps at the optimum position can be a constraint of the optimization process 114.

In order to better understand the optimization process 114, some examples are provided.

In one example, the objective function is based on utility to terminal 10 and cost to the radio access network 14. The utility to the terminal 10 can for example be based on available resources namely throughput at terminal 10. The cost to the network 14 can for example be based on required resources that need to be allocated to the network.

The objective function can be based on efficiency, the utility divided by the cost.

In some examples, the objective function can be based on spectral efficiency, the available resources (utility) divided by the required resources (cost). The available resources are the used resources, for example the carried data.

The optimization process matches a FWA terminal 10, at an optimal position, and a cell based on meeting required resources at terminal 10 and not exceeding available resources at a cell while optimizing the objective function. The optimization process 114 can therefore select for best (spectral) efficiency (with constraints) to get cell and position.

The objective function can be optimized across multiple FWA terminals 10 (at least one of which has different positions) and multiple cells. Alternatively, the objective function can be optimized for a single FWA terminal 10 (which has different positions) and one or multiple cells.

This example is based on the example in the preceding paragraphs, but includes throughput in the objective. Spectral efficiency measurements are made across different combinations of cells and FWA terminal positions. Network data is obtained for the cells and is used to estimate available RAN resources at the cells. For a position of the FWA terminal, it can be determined which cell provides maximum throughput while meeting the guaranteed service level agreement of the FWA terminal. This associates each of multiple cells with an optimal position for that cell. The FWA terminal 10 and best cell are matched based on optimizing throughput. The matched best cell and FWA terminal 10, provides an optimum position from the optimized max throughput (the association of the cell with an optimal position for that cell). The spectral efficiency is the available resources (utility) divided by the required resources (cost). The available resources are the used resources, for example the carried data, that is the throughput. Consequently, the optimization process optimizes throughput.

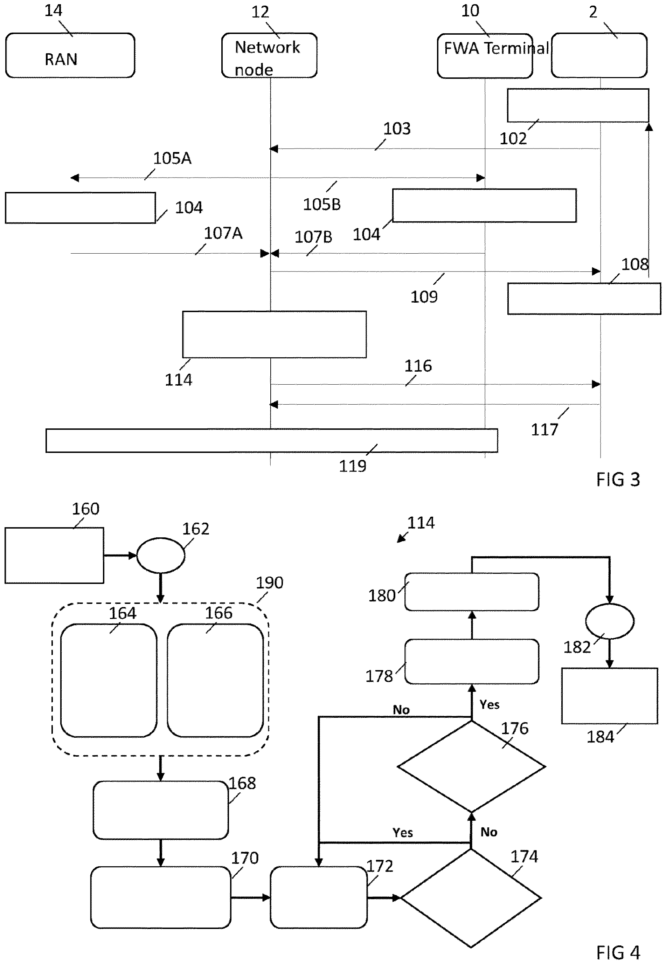

FIG 3 illustrates an example of the system 100.

The system 100 comprises a radio access network 14, a network node 12, a fixed wireless access terminal 10 and an application 2 (which may run on the FWA terminal 10 or on a user apparatus).

The system 100 operates in a manner similar to the system 100 previously described with reference to FIG. 1 and FIG. 2.

FIG.3 illustrates a method for position selection during FWA terminal installation.

The method determines a best placement in a household of a FWA terminal 10 and (optionally) its corresponding serving cell, such that the FWA terminal 10 performance (throughput) and impact on the overall network 14 (considering the current cells' loads) are optimized.

The method involves collection of interference-dependent measurements at a number N of candidate FWA terminal positions. Without loss of generality, a suggestion is for N = 3 (more positions might be burdensome to the customer).

At block 102, the application provides a suggestion to the user of the FWA terminal 10 that the FWA terminal 10 should be installed at a suggested new unexplored position in the household.

The user uses the application 2 to send confirmation 103 to the network node 12 that the FWA terminal 10 has been installed and is ready to take measurements at the current position.

The network node 12 receives the confirmation 103 that the installment is completed and initiates a measurement process.

In this example, it sends a request 105A for measurement to the radio access network 14 and it sends a request 105B for measurement to the FWA terminal 10.

The radio access network 14 responds to the measurement request 105A by performing 104 interference-dependent measurements in respect of communication channels between the fixed wireless access terminal 10, at the current position, and, optionally, different candidate serving cells.

The radio access network 14 sends to the network node 12 a report 107A of measurements, for example, interference-dependent measurements and RAN data (e.g. constraints such as load, or minimum service level requirements.

The FWA terminal 10 responds to the measurement request 105B by performing 104 interference-dependent measurements in respect of communication channels between the fixed wireless access terminal 10, at the current position, and, optionally, different candidate serving cells.

The FWA terminal 10 sends to the network node 12 a report 107B of the FWA terminal measurements for example, interference-dependent measurements.

In some examples, the network node 12 can also take measurements, for example interference-dependent measurements in respect of communication channels between the fixed wireless access terminal 10, at the current position, and, optionally, different candidate serving cells.

The measurements are stored at the network node 12.

The network node 12 sends a report 109 to the application 2 confirming that the measurements for the current position have been completed.

The network node can for example be any one or more components of the network. The network node can, for example, be implemented as a service in the cloud. The network node can, for example, be implemented at the FWA terminal.

The application can suggest continuing the measurement phase at a different position of the FWA terminal 10. The procedure should repeat for at least N $\geq$ 1 FWA terminal positions, to evaluate different household positions. If the application 2 decides not to continue, then the measurement phase stops and the optimization process 114 starts. If the application 2 decides to continue measurement at another position, then the method returns to block 102.

The application 2 can provide a suggestion to the user of the FWA terminal 10 that the FWA terminal 10 should be installed at a suggested new position in the household. This re-starts the method at block 102.

The method can be repeated until measurements have been obtained for a minimum number of positions, for example, three positions or until some continue condition is satisfied.

A new position can be a new location or the same location and a different orientation.

The network node 12 thus obtains interference-dependent measurements in respect of communication channels between the fixed wireless access terminal 10, at different positions, and, optionally, different candidate serving cells.

The network node 12 performs an optimization process 114 to find an optimal one of the different positions.

In some examples the optimization process 114 optimizes an objective function based, at least, upon a parameter that is or depends at least upon spectral efficiency for different positions of the fixed wireless access terminal.

In some examples the optimization process 114 optimizes throughput and/or spectral occupation of the communication channel for the fixed wireless access terminal 10 at the different positions.

For each of the different positions, there is a throughput and/or spectral occupation of a communication channel for the fixed wireless access terminal 10 at that position between the fixed wireless access terminal 10 and a serving cell. The optimization process 114 finds an optimal throughput and/or spectral occupation of a communication channel for the fixed wireless access terminal 10 and also determines the position of the fixed wireless access terminal 10 that resulted in that optimal throughput and/or spectral occupation of the communication channel for the fixed wireless access terminal 10.

The optimization can, as previously described, be constrained by data received from the radio access network 14, for example, load data and/or minimum service level data.

The network node 12 identifies to the application 2 the optimum position 116 to the fixed wireless access terminal 10.

The application 2 sends an acknowledgement message 117 in reply.

The radio access network 14 initializes a communication channel (e.g. 5G residential gateway) with the optimal cell when the FWA terminal is in the optimal position.

The mobile application 2 can be configured to control FWA terminal measurements in coordination with the network node 12, which requests measurements. The application can steer the FWA terminal 10 to connect to different cells at each candidate position, and manage position-specific measurements for all available cells. Data is then gathered by the network node 12 and the application continues to guide data collection in a total of up to N > 0 positions. The optimization can select a position that not only satisfies the FWA terminal's contractual service level agreement capacity, but that also minimizes spectral occupation such that the number of future admissible FWA terminals or other user equipment is maximized.

In some examples, the optimization determines the optimal installation position for the FWA terminal 10 by sorting/ranking the candidate positions. In some examples, the optimization determines the optimal installation position for the FWA terminal 10 by assigning a metric to each of them.

In a possible embodiment, the method will compute a list of positions and a score associated to each. The score can depend on the achievable KPIs, like spectral efficiency, throughput, latency, etc. This information is then showed to the user to guide the selection of the final FWA terminal 10 position. Optionally, the user can communicate to the network node 12 the position index selected for installation. Once the installation is done and confirmed, the network node 12 can configure the RAN accordingly, based optionally on the communicated position index by the user.

The optimization is based on interference-dependent measurements.

The interference-dependent measurements can be real-time measurements.

Alternatively, the interference-dependent measurements can be predicted measurements based on previous real-time measurements that have been adjusted e.g. to take account of time of day. In some examples, the adjustment is dependent upon real-time interference-dependent measurements. This can yield a better forecast of the spectral efficiency of the user.

The optimization can be constrained by radio access network data, for example, load data. The load can be real-time. Alternatively, the load data can be predicted based on previous real-time load data that have been adjusted e.g. to take account of time of day. In some examples, the adjustment is dependent upon real-time load data. This can yield a better forecast of the network load. The load data can be a current load, a peak load, an average load or some combination of them.

The procedure illustrated in any of FIGs 1, 2 or 3 can be performed at a first installation of a FWA terminal 10 or can be triggered at a later time, for example, by a user or by the FWA terminal 10 or by the network node 12 or by the radio access network 14. For example, a condition for re-running the initialization to find an optimum position can be satisfied if performance degrades below a threshold or the radio access network conditions change (e.g. new/discontinued cells, higher load, etc....).

In case the FWA terminal 10 is not able to establish a (possibly weak/low-rate) connection to one cell then the FWA terminal 10 uses an existing side link such as 2G/3G/4G/5G or Wi-Fi (or through a dedicated app running in a device connected with the FWA terminal and with the network) to convey the measurements to the controller, and to receive placement instructions.

For each of the candidate positions for a given FWA terminal 10, the network node 12 may collect at least one of the following measurements. The following abbreviations are used:

| | |
|---|---|
| 3GPP | 3rd Generation Partnership Project |
| 5G | Fifth generation |
| CQI | Channel quality indicator |
| CSI | Channel State Information |
| DFT | Discrete Fourier Transform |
| gNB | Next generation nodeB (5G base station) |
| GNSS | Global Navigation Satellite System |
| GPS | Global Positioning System |
| KPI | Key performance indicator |
| PMI | Pre-coding matrix indicator |
| RBUR | Resource block utilization ratio |
| RAT | Radio Access Technology |
| RI | Rank Indication |
| RRC | Radio Resource Configuration |
| RRUR | Radio resource usage ratio |
| RS | Reference signal |
| RSRP | Reference Signal Received Power |
| RSRQ | Reference Signal Received Quality |
| RSSI | Received Signal Strength Indication |
| SINR | Signal-to-Interference-and-Noise-Ratio |
| SRS | Sounding reference signals |

FWA terminal 10 related measurements can be based on:

- 5G Layer 3 RSRP & RSRQ measurement reports from the FWA terminal 10 (whereby the FWA terminal 10 is connected to the strongest cell, and provides measurement reports for the serving cell and a configured set of intra-frequency and inter-frequency neighbor cells);
- 5G channel state information (CSI) reports for the strongest (i.e., serving) cell. In another embodiment, the FWA terminal 10 connects sequentially to the strongest visible cells and collects CSI reports for each of them. These CSI reports may include some of the following measurements:

    - CSI-RS resource indicator, pointing to the strongest CSI-RS resource that has been used for type I (RI/PMI/CQI) measurements (Note, eType2 supports only a single CSI-RS resource for measurements);
    - RI /PMI/CQI: rank indicator, precoding matrix indicator (for type 1: an index pointing to the codebook entry; for eType 2: wideband DFT beams plus sub-band/quantized Eigenvectors of the beamspace channel covariance matrices) and channel quality indicator;

- gNB 5G Layer 1 measurements:

    - the FWA terminal 10 is configured (via RRC 'SRS-config') to transmit sounding reference signals (SRS) in the uplink,
    - at least the serving cell (but ideally multiple cells in the vicinity of the FWA terminal 10) performs an SRS-based channel estimation. The channel estimates are used to derive more robust channel characteristics such as the channel covariance matrix (which can be assumed to be rather stable for a FWA user). From the channel covariance, the best eigenbeam, thus the beamforming vector corresponding to the strongest Eigenvector of the channel covariance, can be used as beamforming information.
    - the beamforming information (like the best beam indexes or azimuth/elevation directions of departure from the serving transmission point) is computed for serving the FWA terminal 10.

- GNSS (e.g. GPS) coordinates of the FWA terminal 10, send to the FWA terminal placement network node 12 via application layer messages;
- Only for (already installed) active FWA terminals 10:Service quality metrics (collected over a longer period of time to determine changes/anomalies) such as latency, packet error rate, up- and downlink throughput.

Network-related measurements (ideally collected over a longer period - at least 24 hours to capture the full traffic profile of a day, e.g., for already installed FWA terminals 10), based on: Cell load measurements from multiple cells in the vicinity of the FWA terminal 10; e.g.,

- Resource block utilization ratio (RBUR): the average ratio of the number of allocated resource blocks and the total number of resource blocks in a cell;
- Or alternatively (to support cells with different 5G numerologies or different RATs) - the radio resource usage ratio (RRUR): the average ratio of the bandwidth used by RAT to the total RAT bandwidth.

The measurements related to network load, like interference and SINR can be corrected, taking into account the time and day of their acquisition. Models can be trained, with existing data, using available samples, that have at least one of the following information fields:

- Day: like day of the week, or date
- Hour
- FWA terminal 10 position relative to serving base station, or absolute position
- Load value of the serving base station
- Load value of other neighbor base stations
- Measured channel variation (e.g. RSSI standard deviation during measurement)
- Measured interference power variation (e.g. interference power standard deviation during measurement)
- Interference power measured (KPI, or outputs)
- SINR measured (KPI, or outputs).

One could normalize all possible samples from a single FWA terminal 10 or for every available sample. For instance, one can subtract the mean of each KPI value and divide by their standard deviation (or by their maximum minus minimum value), working in either linear or logarithmic scale.

Then, when a new FWA terminal 10 is taking measurements, the same model can be used to determine what could be the interference power and SINR in other time of the day and week to carefully check whether a cell can support the FWA terminal 10 requirements at all times and not in the lucky/unlucky time when the measurements were taken.

FIG.4 illustrates an example of an optimization process 114 performed by the network node 12. In this example, the optimization process finds the optimal position and serving cell not only for the current FWA terminal 10, but also, for FWA terminals 10 that have already been installed and whose performance has degraded and could be improved.

A useful embodiment could be therefore to trigger performance alarms that would inform the network operator of potential network optimizations.

Let us define the FWA terminal 10-cell-position association as a logical hypermatrix M = $(m_{i,j,p}) \in \{0,1\}$, where the $i^{th}$ FWA terminal 10 can only be associated to one cell and position at a time: Initially, $m_{i,j,p} = 0 \ \forall i,j,p$. Then, $m_{i,j,p} = 1$ if the $i^{th}$ FWA terminal 10 is positioned at position $p$ and served by cell $j$.

The network node 12 uses the measurements, for example interference-dependent measurements, to estimate, for each FWA terminal 10 $i$, the average achievable throughput at each candidate position $p$ and candidate serving cell $j$ in the list of preferred cells. The estimated achievable throughput is denoted as $R_{i,j,p}$ and is obtained from the collected measurements.

It can be estimated that a bandwidth (load) at a cell is evenly split between FWA terminals or, alternatively, a remaining bandwidth (load) can be updated each time a new FWA terminal 10 is installed by subtracting the newly allocated bandwidth from the remaining bandwidth to update the remaining bandwidth.

The resource allocation (i.e., number of resource blocks) required by each FWA terminal 10 to guarantee its pre-agreed SLA throughput (e.g., the throughput guaranteed in the contract), is determined from an estimation of the spectral efficiency and the service level agreement guaranteed throughput.

The resource allocation required by each FWA terminal 10 $i$ at cell $j$ and position $p$ is denoted as $RA_{i,j,p}$ and the available resources at each individual cell $j$ as $B_j$.

The estimates are used in network node 12 in hypermatrix form with the following dimensions:

i: FWA terminal 10 index (1 or more)
j: preferred cell index
p: candidate position index

For each FWA terminal 10 i, the network node 12 stores a recommendation of the optimal position if this FWA terminal 10 is to be served by cell $j$. This is performed for all candidate cells in the list of preferred cells. The optimal position for FWA terminal i is the one that maximizes the estimated achievable throughput:

$$p(i,j) = \arg\max_p (R_{i,j,p})$$ given the serving cell.

Alternative network metrics can be used to take this decision (e.g., any function of the already served FWA terminal and mobile traffic in the cell and new FWA terminal performance based on interference-dependent measurements, like the estimated achievable throughput minus a penalty term depending on the already existing FWA terminal and/or mobile load in the cell). However, the estimation of the achievable throughput has the advantage of jointly accounting, in a simple way, for the impact of interference and load at each cell.

At block 160, the network node 12 accesses the measurements (including interference-dependent measurements) from FWA terminals 10 and network data.

At block 162, the optimization process 114 starts.

At block 164, there is an estimation of utility. For example, estimation of a value for each FWA terminal 10 in every position for every serving cell, based on the measurement input. For example, the average achievable throughput for each FWA terminal 10 in every position, considering every potential serving cell.

At block 166 there is an estimate of cost. For example, estimation of the cost of each FWA terminal 10 in every position for every serving cell, based on the measurement input. For example, the resource allocation required by each FWA terminal 10 in every position, considering every potential serving cell.

At block 168, the optimal position for each FWA terminal 10 for every potential serving cell is stored.

At block 170 the objective function is determined based on the utility and cost. For example it can be based on efficiency determined as utility divided by cost or some other metric. The objective function can be based on spectral efficiency which is based on the throughput divided by the allocated resources. Thus the objective function is based, at least, upon a parameter that is or depends at least upon spectral efficiency for different positions of the fixed wireless access terminal.

An efficiency parameter $\rho_{i,j}$ is an objective function defined to decide which cell shall serve each FWA terminal 10 and from which position. This parameter can for instance represent the achievable throughput ($\rho_{i,j} = R_{i,j}$, where $$R_{i,j} = \max_p (R_{i,j,p})$$, or the spectral efficiency when associated to cell $j$ (computed as $$\rho_{i,j} = \frac{R_{i,j}}{RA_i}$$). $\rho_{i,j}$s are the entries of the matrix $\rho$. The throughput can be the average or peak throughput, for example. The throughput can be measured per user and/or per cell (as the aggregate over all users in that cell). The througput can be user plane data throughput. The throughput can be PDCP throughput, for example peak PDCP throughput. At block 172, 174, 176 constrained optimization occurs for each FWA terminal by finding the optimal cell for that terminal.

The method loops over the entries of the $\rho$ matrix as follows:

a. Select 172 the entry with the largest efficiency: $\rho_{max} = \max (\rho)$ and note its subscripts $i^*, j^*$. The optimal position $p^*$ can be deduced 178, given $i^*, j^*$ where $p^* = p(i^*,j^*)$ (see block 168).
b. If FWA terminal 10 i* that corresponds to $\rho_{max}$ is already installed and serviced (i.e., it was selected and placed in a previous iteration of the algorithm and $m_{i^*,j^*,p^*} = 1$), the algorithm moves 174 on to the next largest value in $\rho$. Otherwise, the method continues to block 176.
c. Before associating FWA terminal 10 $i^*$ to its optimal serving cell and position ($j^*,p^*$), the amount of resources in that cell is checked 176. If the cell still has resources (i.e., $RA_{j^*,j^*,p^*} < B_{j^*}$ ) the FWA terminal-cell-position association is performed. Otherwise, the algorithm moves on to the next largest entry of $\rho$ at block 172. $B_j$ represents the available resources at each individual cell $j$. Given that the optimal cell is j*. $B_{j^*}$ is referring to the available resources at cell j*

Thus the optimal objective (e.g. maximal spectral efficiency) per terminal and cell combination is found at block 172 that satisfies the conditions of block 174, 176.

Block 174, requires that the corresponding FWA terminal 10 is not already placed in the corresponding cell, otherwise if the corresponding FWA terminal 10 is already placed in the corresponding cell the method returns to the block 172.

At block 176, it is checked that there are enough resources available at the corresponding cell. If there are insufficient resources available at the corresponding cell the method returns to block 172 and the next best cell for the FWA terminal is chosen.

At block 178, the method has determined the best cell for the FWA terminal. It accesses the best position for that terminal in that cell (previously stored at block 168) to obtain the best position and best cell for the FWA terminal.

Block 180, makes sure the optimization process covers all of the FWA terminals by looping back to block 172 (not illustrated)

At block 182, the method ends.

At block 184, the method provides as its output the recommended cell and position for each FWA terminal 10.

There can be several embodiments for estimating the achievable FWA terminal 10 throughput based on interference-dependent measurements:

*Embodiment 1:* Interference covariance matrices and beamforming information from all FWA terminals 10 are used to represent the intra-cell interference or information about the average load over each serving beam or direction by neighboring cells (e.g. via proprietary signaling or ad-hoc Xn messages between different cells/gNBs).
*Embodiment 2:* RSRP and RSRQ measurements represent the serving cell signal strength and the latter accounts also for intra/inter-cell interference.
*Embodiment 3:* FWA terminal 10-reported CSI can be used to predict the throughput of the individual gNB-FWA terminal 10-links.

In combination with the derived metrics from above, the cell load is used to predict the average throughput for each FWA terminal 10 candidate position or to force load balancing actions. In particular, the cell load gives information of the free resources to be used by new services, including FWA terminals 10. Then, the throughput achievable scales almost linearly with the amount of available resources, multiplied with the spectral efficiency achievable, that depends on the channel quality, estimated with RSRQ and/or CSI, and/or any other mean to obtain an estimate of the SINR.

The resource allocation of each FWA terminal 10 $i$ at cell $j$ and position $p$: $RA_{i,j,p}$ can be estimated from its spectral efficiency $\varphi_{i,j,p}$ and its guaranteed service level agreement throughput $R_i^{SLA}$ , such that:

$$RA_{i,j,p} = \frac{R_i^{SLA}}{\varphi_{i,j,p}}.$$

The measurements collection and FWA terminal 10 placement processes may be triggered by at least one of the following events:

Adding/removing FWA terminal(s) from the network;
Periodic suggested maintenance;
Changes in the collected information, whereby thresholds (used to detect changes) are defined differently for each type of information; e.g.,

Degradation (e.g., 50% over the during over multiple days) in the service quality of at least one FWA terminal 10,
Long-term changes (e.g., 50% over multiple weeks) in the cell load,
Triggered as part of debugging procedure in case of performance drop or customer complain.

It is also possible to deploy multiple FWA terminals 10 per customer (placed at different positions), to enable (non-coherent) joint transmission/reception.

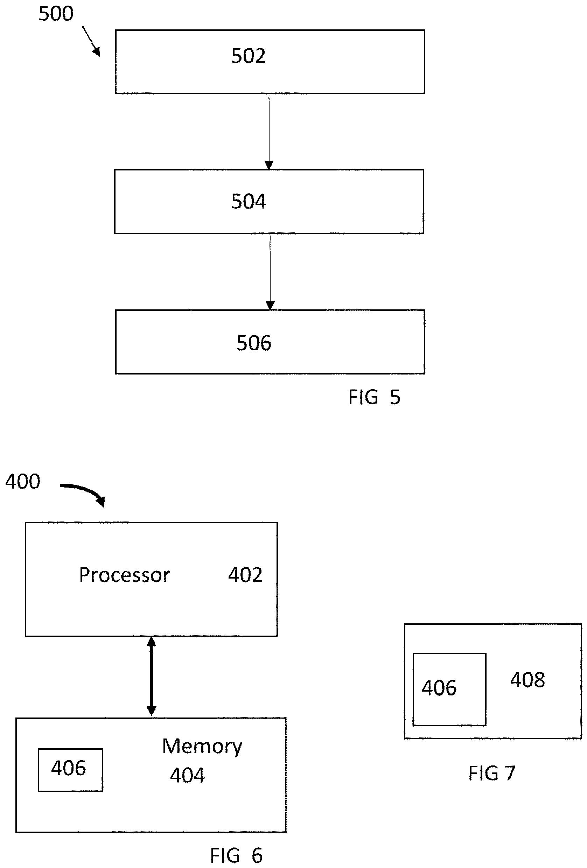

FIG.5 illustrates an example of a method 500 comprising:

at block 502, obtaining interference-dependent measurements in respect of communication channels, in a cellular radio telecommunications system 100, between a fixed wireless access terminal 10, at different positions, and, optionally, different candidate serving cells;
at block 504, performing an optimization process to find an optimal one of the different positions that optimizes throughput and/or spectral occupation of the communication channel for the fixed wireless access terminal 10 at the different positions; and
at block 506, identifying the optimum position to the fixed wireless access terminal 10 for setup of the fixed wireless access terminal 10 in the cellular radio telecommunications system 100.

In at least some examples, at block 504, the method 500 comprises: performing the optimization process to find one of the different **positions** and one of the different **candidate cells** that optimizes throughput and/or spectral occupation of the communication channel for the fixed wireless access terminal at its position and the different candidate cells. Then at block 506, the method 500 comprises identifying the optimum position of the fixed wireless access terminal for setup of the fixed wireless access terminal in the cellular radio telecommunications system and identifying the optimum cell that is serving the fixed wireless access terminal at the optimal position.

The method can be performed at a network node which can for example be any one or more components of the network. The network node can, for example, be implemented as a service in the cloud. The network node can, for example, be implemented in whole or in part at a FWA terminal.

FIG. 6 illustrates an example of a controller 400 suitable for use in an apparatus, for example, the FWA terminal 10, a user apparatus or a network node 12.

Implementation of a controller 400 may be as controller circuitry. The controller 400 may be implemented in hardware alone, have certain aspects in software including firmware alone or can be a combination of hardware and software (including firmware).

As illustrated in FIG. 6 the controller 400 may be implemented using instructions that enable hardware functionality, for example, by using executable instructions of a computer program 406 in a general-purpose or special-purpose processor 402 that may be stored on a computer readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus when loaded into the processor 402. The computer program instructions, of the computer program 406, provide the logic and routines that enables the apparatus to perform the methods illustrated in the accompanying Figs. The processor 402 by reading the memory 404 is able to load and execute the computer program 406.

The apparatus 12 can therefore comprises:

at least one processor 402; and
at least one memory 404 including computer program code
the at least one memory 404 and the computer program code configured to, with the at least one processor 402, cause the apparatus 12 at least to perform:

performing an optimization process based on, for each fixed wireless access terminal 10 position in the set of fixed wireless access terminal 10 positions, at least one interference-dependent measurement in respect of communication channels between the fixed wireless access terminal 10, at the of fixed wireless access terminal 10 position, and, optionally, different cells or candidate serving cells; and
identifying the optimum position to the fixed wireless access terminal 10.

The optimization can optimize an objective function based, at least, upon a parameter that is or depends at least upon spectral efficiency for different positions of the fixed wireless access terminal 10.

The optimization can optimize throughput and/or spectral occupation of a communication channel for the fixed wireless access terminal 10.

The apparatus 12 can therefore comprise:

at least one processor 402; and

at least one memory 404 including computer program code,
the at least one memory storing instructions that, when executed by the at least one processor 402, cause the apparatus at least to:

performing an optimization process to find an optimal position, from a set of fixed wireless access terminal 10 positions based on, for each fixed wireless access terminal 10 position in the set of fixed wireless access terminal 10 positions, at least one interference-dependent measurement in respect of communication channels between the fixed wireless access terminal 10, at the of fixed wireless access terminal 10 position, and, optionally, different candidate serving cells; and
identifying the optimum position to the fixed wireless access terminal 10.

The optimization can optimize an objective function based, at least, upon a parameter that is or depends at least upon spectral efficiency for different positions of the fixed wireless access terminal 10.

The optimization can optimize throughput and/or spectral occupation of a communication channel for the fixed wireless access terminal 10.

As illustrated in FIG. 7, the computer program 406 may arrive at the apparatus 12 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 12 may propagate or transmit the computer program 406 as a computer data signal.

Computer program instructions for causing an apparatus to perform at least the following or for performing at least the following:

performing an optimization process to find an optimal position, from a set of fixed wireless access terminal 10 positions based on, for each fixed wireless access terminal 10 position in the set of fixed wireless access terminal 10 positions, at least one interference-dependent measurement in respect of communication channels between the fixed wireless access terminal 10, at the of fixed wireless access terminal 10 position, and, optionally, different candidate serving cells; and
identifying the optimum position to the fixed wireless access terminal 10.

The computer program instructions may be comprised in a computer program, a non-transitory computer readable medium, a computer program product, a machine readable medium. In some but not necessarily all examples, the computer program instructions may be distributed over more than one computer program.

The optimization can optimize an objective function based, at least, upon a parameter that is or depends at least upon spectral efficiency for different positions of the fixed wireless access terminal 10.

The optimization can optimize throughput and/or spectral occupation of a communication channel for the fixed wireless access terminal 10

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:

(a) hardware-only circuitry implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device. The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user.

The network node 12 can be a module. The FWA terminal 10 can be a module.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

**Claims**

1. A network node for setup of a fixed wireless access terminal in a cellular radio telecommunications system comprising:

   means for obtaining interference-dependent measurements in respect of communication channels between the fixed wireless access terminal, at different positions, and, optionally, different candidate serving cells;
   means for performing an optimization process to find one of the different positions that optimizes an objective function based, at least, upon a parameter that is or depends at least upon spectral efficiency for different positions of the fixed wireless access terminal;
means for identifying the position of the fixed wireless access terminal found by the optimization process.

2. A network node as claimed in claim 1, wherein the means for performing the optimization process to find the position is configured to optimize throughput and/or spectral occupation of a communication channel for the fixed wireless access terminal at the different positions.

3. A network node as claimed in claim 1 or 2, wherein the means for performing the optimization process to find the position is configured to find a combination of one of the different candidate cells and one of the different positions that optimizes the objective function, or optimizes throughput and/or spectral occupation of the communication channel for the fixed wireless access terminal and the different candidate cells.

4. A network node as claimed in claim 1, 2 or 3 comprising means for enabling co-ordination of a sequence of measurement between the fixed wireless access terminal and different cells or comprising means for enabling co-ordination of measurement in respect of communication channels between the fixed wireless access terminal and a sequence of serving cells with time periods during which the fixed wireless access terminal is connected to the respective serving cell.

5. A network node as claimed in any preceding claim comprising means for sending at least one guidance message to a user of the fixed wireless access terminal that instructs scheduled re-positioning of the fixed wireless access terminal.

6. A network node as claimed in any preceding claim, wherein the optimization process optimizes an objective function based, at least, upon a parameter that is or depends upon spectral efficiency.

7. A network node as claimed in claim 6, wherein the parameter dependent upon spectral efficiency is or is based upon one or more of:
throughput, signal-to-interference-noise-ratio (SINR), reference signal received quality (RSRQ), Channel Quality Indicator (CQI), resource occupancy, spectral efficiency, current load, average load, peak load.

8. A network node as claimed in any preceding claim comprising means for obtaining network data, wherein the network data provides one or more constraints for the optimization process and wherein the optimization process is constrained by an available bandwidth at a cell and/or wherein the optimization process is constrained by a minimum throughput.

9. A network node as claimed in any preceding claim wherein the optimization process optimizes an objective function for the fixed wireless access terminal, or wherein the optimization process optimizes an objective function for multiple fixed wireless access terminals.

10. A method for setup of a fixed wireless access terminal in a cellular radio telecommunications system comprising the steps of:

obtaining interference-dependent measurements in respect of communication channels, in the cellular radio telecommunications system, between the fixed wireless access terminal, at different positions, and one serving cell or, optionally, different candidate serving cells;
performing an optimization process to find one of the different positions that optimizes an objective function based, at least, upon a parameter that is or depends at least upon spectral efficiency for different positions of the fixed wireless access terminal
identifying the found position of the fixed wireless access terminal for setup of the fixed wireless access terminal in the cellular radio telecommunications system.

11. The method as claimed in claim 10 comprising:

performing the optimization process to find one of the different **positions** and one of the different **candidate cells** that optimizes the objective function;
identifying the found position of the fixed wireless access terminal for setup of the fixed wireless access terminal in the cellular radio telecommunications system and identifying the found cell that is serving the fixed wireless access terminal at its position.

12. A computer program that when run on at least one processor causes:

performing an optimization process to find a position, from a set of fixed wireless access terminal positions, that optimizes an objective function based, at least, upon a parameter that is or depends at least upon spectral efficiency for different positions of the fixed wireless access terminal based on, for each fixed wireless access terminal position in the set of fixed wireless access terminal positions, at least one interference-dependent measurement in respect of communication channels between the fixed wireless access terminal, at the of fixed wireless access terminal position, and, optionally, different candidate serving cells; and
identifying the found position to the fixed wireless access terminal.

13. A system comprising

network node as claimed in claim 5 or any of claims 6 to 9, when dependent upon claim 5, and the fixed wireless access terminal or other apparatus, comprising
means for receiving the at least one guidance message to enable a user of the fixed wireless access terminal to re-position the fixed wireless access terminal in accordance with a scheduled re-positioning of the fixed wireless access terminal indicated in the received guidance message.

14. A system as claimed in claim 13, comprising an application program configured to display instructions to the user of the fixed wireless access terminal that instructs a scheduled re-positioning of the fixed wireless access terminal and configured to indicate to the user of the fixed wireless access terminal the position of the fixed wireless access terminal found by the optimization process.

15. A computer program that when run on at least one processor enables the system as claimed in claim 13 or 14.

FIG 1

14
RAN

12
Network node

10
FWA
Terminal

100

110

New Position p1

102

Collection cell & interference-dependent
measurement (& network load data)

104

Collection cell & interference-dependent
measurement (& network load data)

104

108

REPEAT  new position  p, (optionally) new cells c

108

REPEAT  new position  p, (optionally) new cells c

Optimize p (optionally c) using
interference-dependent measurements
(and network load data)

114

p   116

c

c

118A

118B

FIG 2

FIG 3

FIG 4

500

502

504

506

FIG 5

400

Processor　　402

Memory
404

406

FIG 6

406　　408

FIG 7

Europäisches
Patentamt

European
Patent Office

Office européen
des brevets

# EUROPEAN SEARCH REPORT

**Application Number**

EP 23 16 6402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/182932 A1 (SAMSUNG ELECTRONICS CO LTD [KR]) 16 September 2021 (2021-09-16) | 1,5,10, 12-15 | INV. H04W24/02 |
| Y | * paragraph [0035] - paragraph [0048] *<br>* paragraph [0054] - paragraph [0062] *<br>* paragraph [0092] - paragraph [0101] *<br>* figures 1A, 1B, 2, 8, 9C * | 2-4,6-9, 11 | ADD. H04W88/02 H04W88/18 |
| X | US 2022/094777 A1 (YEATTS CHRISTOPHER [US] ET AL) 24 March 2022 (2022-03-24) | 1,10,12 | |
| Y | * paragraphs [0008], [0041] *<br>* paragraph [0058] - paragraph [0066] *<br>* figures 2,3 * | 2,6,7 | |
| Y | US 2022/007374 A1 (SEVINDIK VOLKAN [US] ET AL) 6 January 2022 (2022-01-06)<br>* paragraph [0130] - paragraph [0134] *<br>* figure 5 * | 3,4,11 | |
| Y | SALLENT O ET AL: "Data Analytics in the 5G Radio Access Network and Its Applicability to Fixed Wireless Access", 2019 IEEE 89TH VEHICULAR TECHNOLOGY CONFERENCE (VTC2019-SPRING), IEEE, 28 April 2019 (2019-04-28), pages 1-6, XP033568298, DOI: 10.1109/VTCSPRING.2019.8746553 [retrieved on 2019-06-25] *Chapter IV.B RAN Data Analytics Function* | 8 | TECHNICAL FIELDS SEARCHED (IPC) H04W |
| Y | US 2020/275457 A1 (HMIMY HOSSAM [US]) 27 August 2020 (2020-08-27)<br>* abstract * | 9 | |

The present search report has been drawn up for all claims

| Place of search | Date of completion of the search | Examiner |
|---|---|---|
| Munich | 15 September 2023 | Schorgg, Alfred |

## ANNEX TO THE EUROPEAN SEARCH REPORT
## ON EUROPEAN PATENT APPLICATION NO.

EP 23 16 6402

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2023

| Patent document cited in search report | | Publication date | Patent family member(s) | | Publication date |
|---|---|---|---|---|---|
| WO 2021182932 | A1 | 16-09-2021 | NONE | | |
| US 2022094777 | A1 | 24-03-2022 | NONE | | |
| US 2022007374 | A1 | 06-01-2022 | NONE | | |
| US 2020275457 | A1 | 27-08-2020 | US 2020275457 | A1 | 27-08-2020 |
| | | | US 2022078804 | A1 | 10-03-2022 |

EPO FORM P0459

For more details about this annex : see Official Journal of the European Patent Office, No. 12/82